# EUROPEAN PATENT SPECIFICATION

(11) **EP 0 542 031 B1**
(45) Date of publication and mention of the grant of the patent: **23.04.1997**
(21) Application number: 92118356.2
(22) Date of filing: 27.10.1992
(51) Int. Cl.: A47J 27/04, A21B 3/04, F24C 15/00

(54) **Security device against extra pressure in water-heaters and against eddy inside chambers, particularly with equipments used for the cooking of foods**
Überdrucksicherung für Wassererhitzer und Anti-Wirbelvorrichtung in Räumen, insbesondere Kochräumen
Dispositif de sécurité contre surpression dans des chauffe-eau et dispositif anti-remous dans des enceintes, en particulier des enceintes de cuisson

(30) Priority: 29.10.1991 IT TV910097
(43) Date of publication of application: 19.05.1993
(73) Proprietor: LAINOX S.R.L., I-31029 Vittorio Veneto (TV) (IT)
(72) Inventor: Lazzer, Natalino, I-31029 Vittorio Veneto (TV) (IT)
(74) Representative: D'Agostini, Giovanni, Dr.

(56) References cited:
- EP-A- 0 092 851
- DE-A- 4 116 544

## Description

The subject-matter of the present invention is a security device against extra-pressure in water-heaters and against vacuum in chambers, particularly with equipments used for the cooking of foods.

The innovation finds particular even if not exclusive application in the big kitchens field, and in particular in trivalent ovens or in so-called mixed ovens.

In prior art, we know of ovens for big kitchens that can practically be of various types, but recently the demand has been directed mostly to three models, the first of which provides heating for the steam-cooking chamber, the second by convection (both of the electric type and with burner), and finally a third mixed one, which is allowed to operate in the first or the second mode, or simultaneously in both modes. Schematically, an oven may be formed, besides by the necessary control board and its relative electric and electronic components, of a parallelepipedal external structure, which contains at least one cooking chamber, inside which it is possible to enter through a traditional little door. On the bottom of the cooking chamber, in this case with regard to the mixed ovens, there is a mouth-piece of a polyvalent pipeline, which both functions as a drain for cooking liquids and for the excess steam, or is able to draw air as a consequence of possible vacuums inside said chamber. The pipeline is normally placed slantwise, extending itself to the exterior of the oven, where it is connected with a funnel-shaped waste-pipe, suitably arranged in the very place where said device is placed. Perpendicularly to the waste-pipe where it is introduced, it is combined with a drain venting pipe, which comes freely out of the upper part of the oven. As to the heating of the cooking chamber, this may be obtained: by steam heating, and in this case the use of a water-heater of the traditional type is expected; with a steam-emitting pipe, directly inside the chamber; by convection, that is by using an impeller that is placed inside a hollow space and communicates with the cooking chamber, and is conveniently wound with heat exchange tube bundles, or eventually by simultaneously using both ways.
In the second case that is quoted, in the lower side of the oven are also placed a gas burner and a relative combustion chamber.
All these cases can be seen in Italian Patent No. 1158054 filed on 15.01.1982, in the name of the same applicant, having as an object a forced-convection oven for the cooking of food.

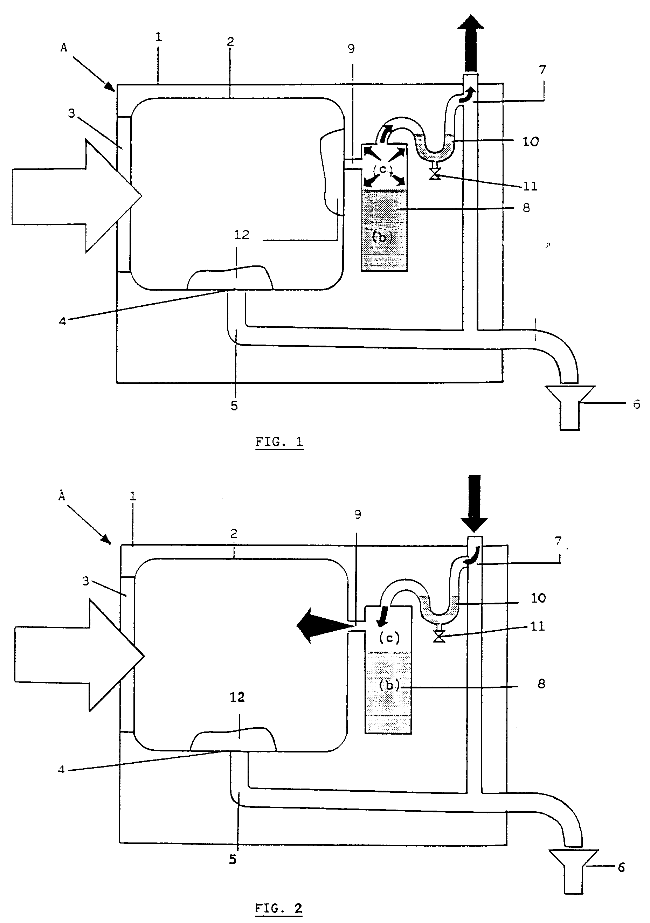

In the above-disclosed solutions, various disadvantages can be noticed. Among these, first of all must be quoted that in case of a casual and simultaneous closing of the waste-pipe of the cooking chamber and of the steam-emitting pipe inside the chamber, we will have a remarkable increase of pressure in the water-heater, with possible negative consequences for the equipment, as well as a wrong functioning of the oven, with obvious consequences for the cooking of food. In other cases, even if just the waste-pipe is occluded, with high temperatures inside the steam-chamber the amount of air will be low if compared with its volume. If we introduce now large amounts of food with a low temperature, we will notice a sudden pressure drop with the door closed, and it will be necessary to draw large amounts of air from the outside. Therefore, it will be possible to notice, besides some difficulty when trying to open the door, again a bad functioning of the cooking system, which particularly affects the uniformity of the cooking.
Prior art discloses a boiler with syphon drain-trap pressure release security device, having an upper expansion chamber connected to a cooking chamber of an oven, particularly for cooking foods, to avoid overpressure or vacuum inside the cooking chamber during cooking or on opening the door, of the type including a hole obtained on the bottom of the cooking chamber, connected with a drain pipe extending out of the oven, said drain pipe having a perpendicular drain venting pipe going out to the exterior of the upper side of the oven, said drain venting pipe having a bypass connecting it to said expansion chamber of said boiler by said syphon pressure release, and wherein the drain-trap of said syphon is a "U" shaped pipe section where water collects.
The "U" shaped pipe section of the drain trap is placed beside, and below the water level of the boiler, thus allowing it to fill by overflow of the water in the boiler.
This solution has the inconveniences that overpressure and underpressure in discharge from and suction into the cooking chamber of the oven cannot be regulated, furthermore there is the problem of deposits on the bottom of the "U" shaped pipe section thus causing danger of occulsion. The same problem arises in similar solution disclosed in EP-A-0092851 (CONVOTHERM).
This solution discloses a system for heating food comprising a boiler 14 with an expansion chamber and a U-shaped syphon drain-trap pressure release security device 22 connected to the "upper side" of said chamber, said expansion chamber being connected to a cooking chamber of an oven, said chamber being provided at its bottom with an aperture and a drain pipe said drain pipe leading to a perpendicular venting pipe ending to the exterior of the upper side of said oven, said venting pipe being furthermore connected to said syphon drain-trap which can be supplied with water, said water level being regulated within the syphon.
The level of the water in the expansion chamber being subtantially the same level of the water which has overflowed in the syphon drain-trap. Furthermore the opening of the boiler which leads to the syphon drain-trap is placed below the opening of the boiler which leads to the cooking chamber.
This solution can obstruct in exceptional cases the syphon and as a consequence this does not allow maximun efficiency.
The aim of the present invention is to find a remedy for the above-mentioned disadvantages and to obtain maximum efficiency.
This and other objects are attained by the present innovation, according to the characteristics of the included claims, which solve the exposed problems by means of an apparatus comprising a cooking chamber of an oven, particularly for cooking food, a boiler with a syphon drain-trap pressure release security device, having an upper expansion chamber connected to said cooking chamber to avoid overpressure or vacuum inside the cooking chamber during cooking or on opening of a door, the cooking chamber, being provided with a hole at its bottom connected with a drain pipe extending out of the oven, a drain vent pipe going out to the exterior of the upper side of the oven perpendicularly connected to the drain pipe, said drain vent pipe having a bypass connecting it to said expansion chamber of said boiler through a syphon pressure release security device, and wherein the said syphon forming a drain-trap is a "U" shaped pipe section where water collects, said syphon drain-trap being connected to the upper side of said expansion chamber of the water heater of the boiler,
characterised in that:
- on the bottom of said "U" shaped pipe section of the drain-trap there is a restoration opening which allows regulation of the water level within the "U" shaped pipe section;
- said "U" shaped section of said drain-trap is placed at a height above that of the water level present inside the water-heater when in use, and at least at the same height as that of a steam-emitting pipe which connects said boiler to said cooking chamber.
In this way, through the important creative contribution whose effect realizes an immediate technical progress, different advantages are achieved, among those we quote first of all the fact that at least two troublesome instances are avoided, such as overpressure of the boiler and vacuum in chamber, in the case of casual occlusions, thus optimizing the functioning of the oven, and in particular with obvious benefits on cooking uniformity.
These and other advantages will appear by the subsequent detailed description of preferential solutions of realization, with the help of the schematic drawings included, whose details of execution must not be considered as a limitation but just as an example.
Figure 1 represents a side-view and a sectional view of the internal side of an oven, where we point out one of the possible functions of the security device.
Figure 2 also represents a side-view and a sectional view of the internal side of the same oven, where we point out a further function of the security device.
Referring also to the Figures, it can be noticed that an oven (A), besides its relative commands and its electric and electronic components, here not represented, is composed of an external metallic structure, substantially parallelepipedal (1), inside of which a cooking chamber (2) is obtained, which can be frontally reached through a traditional door (3). The cooking chamber has on its bottom a hole (4), which allows the downflow of cooking-derived liquids that gather on the bottom through a slanting drain pipe (5), which is connected with the said hole. The drain pipe (5) extends itself out of the oven (A), then goes into a funnel-shaped earth drain (6), suitably pre-arranged where the equipment is installed. A drain venting pipe (7), obtained on the back of the oven (A), is perpendicularly introduced into the drain pipe (5), while the opposite end comes out of the upper side of said oven (A). In ovens of the trivalent type, or in any case at least for the steam-cooking of food, is also arranged the use of a water-heater (8) supplied with sensors that keep water under the level of the steam-emitting pipe (9), which connects the water-heater (8) with the chamber (2). Said water-heater (8) always includes as a rule an area (b) which is constantly filled with water, and an upper area (c) forming the expansion box, which communicates through a bypass connection (10) with the drain venting pipe (7). Said bypass connection (10) is composed of a drain-trap placed at a level above the level of the water (b) attainable inside the water-heater (8). More particularly, inside the drain-trap is introduced some water, whose level is restorable by means of a recharging solenoid valve (11). In this case the level of water contained in the drain-trap (10) is even higher than the steam-emitting pipe (9).
In case of overpressure in the water-heater (8), see Figure 1., as an effect of the simultaneous occlusion (12) both of the drain (4) and of the steam-emitting pipe (9) inside the chamber (2), the pressure of the water-heater, when a pre-determined value is reached, will push the water of the drain-trap (10) towards the drain venting pipe (7), thus removing the amount of air and the excess steam, whereas the force of gravity pushes the water contained in the drain-trap (10), which is received by the drain pipe (5) to eventually flow down to the drain (6). In the end, by means of the recharging solenoid valve (11), the level of water inside the drain-trap (10) will be restored. In Fig. 2, on the other hand the security function against vacuum in the chamber is illustrated, in the case that, with high temperatures inside the cooking chamber, the amount of air will be quite low if compared with the volume. By introducing large amounts of food at a low temperature, with a closed door (3) and a casual occlusion (12) of the drain hole (4), a sudden fall in pressure occurs, which makes it necessary for large amounts of air from the outside to be drawn back inside. In this case, water from the drain-trap (10) of the filled water-heater (8) will be re-sucked into the same water-heater (8), thus clearing the way for the external air through the course: drain venting pipe (7), drain-trap (10), water-heater (8) and finally, chamber (2).
Be noted in Figure 1 that the opening leading to said"U" shaped section of said drain-trap 10) is placed on the top of said expansion chamber (c) of the water-heater (8) and the opening of the connection to the cooking chamber is situated below same, in this way the scope of maximum efficiency is completly reached.

## Claims

1. Apparatus comprising a cooking chamber (2) of an oven, particularly for cooking food, a boiler with a syphon drain-trap pressure release security device, having an upper expansion chamber (c) connected to said cooking chamber (2) to avoid overpressure or vacuum inside the cooking chamber (2) during cooking or on opening of a door, the cooking chamber (2), being provided with a hole at its bottom connected with a drain pipe (5) extending out of the oven, a drain vent pipe (7) going out to the exterior of the upper side of the oven perpendicularly connected to the drain pipe, said drain vent pipe (7) having a bypass connecting it to said expansion chamber (c) of said boiler through a syphon pressure release security device, and wherein the said syphon forming a drain-trap is a "U" shaped pipe section where water collects, said syphon drain-trap (10) being connected to the upper side of said expansion chamber (c) of the water heater of the boiler (8); characterised in that:
- on the bottom of said "U" shaped pipe section of the drain-trap (10) there is a restoration opening (11) which allows regulation of the water level within the "U" shaped pipe section;
- said "U" shaped section of said drain-trap (10) is placed at a height above that of the water level (b) present inside the water-heater (8) when in use, and at least at the same height as that of a steam-emitting pipe (9) which connects said boiler (8) to said cooking chamber (2).

2. A device according to claim 1, characterized in that said restoration opening (11) of said drain-trap (10), operates through a recharging solenoid valve (11).

3. A device according to claims 1 and 2, characterized in that the opening leading to said "U" shaped section of said drain-trap (10) is placed on the top of said expansion chamber (c) of the water-heater (8) and the opening of the connection to the cooking chamber is situated below same.

## Patentansprüche

1. Apparat mit einer Kochkammer (2) eines Herds, insbesondere zum Kochen von Essen, einen Boiler mit Syphon-DruckfreigabeSicherheitsvorrichtung, mit einer oberen Expansionskammer (c), die mit besagter Kochkammer (2) verbunden ist, um Überdruck oder ein Vakuum in der Kochkammer (2) beim Kochen oder beim Öffnen der Tür zu vermeiden, wobei die Kochkammer (2) in ihrem Boden ein Loch aufweist, das mit einem Ablaßrohr (5) verbunden ist, das aus dem Herd herausführt, einem Luftablaßrohr (7), das zum Äußeren der Oberseite des Herds führt und senkrecht mit dem Ablaßrohr verbunden ist, wobei das Luftablaßrohr (7) eine Umführung aufweist, die es durch eine Syphon-Druckfreigabe-Sicherheitsvorrichtung mit der Expansionskammer (c) des Boilers verbindet, und bei der der einen Geruchsverschluß bildende Syphon ein U-förmiger Rohrabschnitt ist, worin sich das Wasser sammelt, wobei der Syphon (10) mit der Oberseite der Expansionskammer (c) des Wassererhitzers des Boilers (8) verbunden ist, gekennzeichnet dadurch, daß:
- am Boden des U-förmigen Rohrabschnitts des Syphons (10) sich eine Rückstellöffnung (11) befindet, die die Regelung des Wasserstands in dem U-förmigen Rohrabschnitt gestattet;
- der U-förmige Rohrabschnitt des Syphons (10) während des Betriebs oberhalb der Höhe des Wasserstands (b) im Wassererhitzer (8) angebracht ist und mindestens genauso hoch wie ein Dampfabgaberohr (9), das den Boiler (8) mit der Kochkammer (2) verbindet.

2. Vorrichtung nach Anspruch 1, gekennzeichnet dadurch, daß die Rückstellöffnung (11) des Syphons (10) durch ein wiederaufladendes Magnetventil (11) tätig ist.

3. Vorrichtung nach Ansprüchen 1 und 2, gekennzeichnet dadurch, daß die Öffnung, die zu dem U-förmigen Rohrabschnitt des Syphons (10) führt, auf der genannten Expansionskammer (c) des Wassererhitzers (8) liegt und die Öffnung der Verbindung zur Kochkammer unterhalb derselben.

## Revendications

1. Appareil avec une chambre de cuisson (2) d'un four, en particulier pour cuire des plats, une chaudière avec un dispositif de sécurité de relâchement de pression à siphon, avec une chambre d'expansion supérieure (c) liée à ladite chambre de cuisson pour éviter un excès de pression ou un vide dans la chambre de cuisson (2) en cuisant ou en ouvrant la porte, la chambre de cuisson (2) présentant dans son fond une forure liée à un tuyau de décharge (5) lequel sort du four, un tuyau de décharge d'air (7) lequel conduit vers l'extérieur du côté supérieur du four et est lié verticalement avec le tuyau de décharge, le tuyau de décharge d'air (7) présentant une dérivation qui le lie à travers un dispositif de sécurité de relâchement de pression à siphon, avec la chambre d'expansion (c) de la chaudière, et dans laquelle le siphon qui forme une pipe de W.C. est une section de tuyau en U dans laquelle l'eau s'accumule, le siphon (10) étant lié au côté superieur de la chambre d'expansion (c) de la chaudière d'eau (8), caractérisé en ce que:
- au fond de la section de tuyau en U du siphon (10) il y a une ouverture de restauration (11), laquelle permet la régulation du niveau d'eau dans la section de tuyau en U;
- la section de tuyau en U du siphon (10) pendant le fonctionnement est située au-dessus du niveau de l'eau (b) das la chaudière d'eau (8) et est au moins aussi haut qu'un tuyau d'émission de vapeur (9) que lie la chaudière (8) avec la chambre de cuisson (2).

2. Dispositif selon la revendication 1, caractérisé en ce que la section de tuyau en U du siphon (10) opère à travers une électrovanne de recharge (11).

3. Dispositif selon les revendications 1 et 2, caractérisé en ce que l'ouverture qui conduit à la section de tuyau en U du siphon (10) est située au sommet de ladite chambre d'expansion (c) de la chaudière d'eau (8) et l'ouverture de la connexion vers la chambre de cuisson au-dessous de cette dernière.
